# EUROPÄISCHE PATENTSCHRIFT

(11) **EP 2 347 645 B1**
(45) Veröffentlichungstag und Bekanntmachung des Hinweises auf die Patenterteilung: **01.05.2013**
(21) Anmeldenummer: 10188995.4
(22) Anmeldetag: 27.10.2010
(51) Int. Cl.: A01D 41/12, A01F 12/40

(54) **Verteileinrichtung für eine selbstfahrende Erntemaschine**
Distributor device for a self-propelled harvesting machine
Dispositif de répartition pour une moissonneuse automotrice

(30) Priorität: 25.01.2010 DE 102010005692
(43) Veröffentlichungstag der Anmeldung: 27.07.2011
(73) Patentinhaber: CLAAS Selbstfahrende Erntemaschinen GmbH, 33428 Harsewinkel (DE)
(72) Erfinder: Terörde, Stefan, 48231 Warendorf (DE); Brinkmann, Jörn, 33428 Harsewinkel (DE); Vieregge, Christopher, 32694 Dörentrup (DE); Brand, Jörg, 33428 Harsewinkel (DE)

(56) Entgegenhaltungen:
- EP-A1- 1 219 163
- DE-A1- 4 431 802
- DE-A1- 19 535 175
- DE-C1- 19 908 111
- US-B1- 6 547 169

## Beschreibung

Die Erfindung betrifft eine selbstfahrende Erntemaschine mit einer Verteileinrichtung mit den Mermale des Oberbegriffes des Anspruchs 1.

Aus der DE 199 08 111 C1 ist eine Verteileinrichtung der eingangs genannten Art bekannt. Die Verteileinrichtung weist mehrere senkrecht zur Rotationsachse der Verteileinrichtung angeordnete, sich radial nach außen erstreckende Verteilelemente auf, die in einer starren Ausführung der Verteilelemente aus einem Metall oder in einer beweglicher Ausführung aus einem flexiblen Material bestehen. Die Verteileinrichtung umfasst des Weiteren eine die Rotationsebene der Verteilelemente zumindest abschnittsweise umschließende Mantelfläche eines Leitbleches, das der Führung eines von einer Häckseleinrichtung bereitgestellten und an die Verteileinrichtung übergebenen Erntegutstromes in der Verteileinrichtung dient.

Als nachteilig an einer Verteileinrichtung gemäß dem Stand der Technik hat sich gezeigt, dass es bei einer starren Ausführung der Verteilelemente insbesondere bei einem Erntegut mit hohem Feuchtigkeitsgehalt sowie hoher Viskosität zu einem Einklemmen des Erntegutes zwischen der Stirnseite des Verteilelementes und der dieses als Leitelement umgebenden Mantelfläche kommt. Das Einklemmen geht mit einer Erhöhung der Leistungsaufnahme der Verteileinrichtung einher. Ersetzt man die starren Verteilelemente durch solche aus einem flexiblen Material, so lässt sich der Effekt des Einklemmens auf Grund der Nachgiebigkeit der Verteilelemente vermindern, was jedoch bei gleicher Antriebsleistung wie bei der Verwendung von starren Verteilelementen mit einer geringeren Wurfweite des Erntegutes einhergeht. Zudem weisen flexible Verteilelemente gegenüber den starren Verteilelementen einen höheren Verschleiß auf.

Aufgabe der vorliegenden Erfindung ist es, die Effizienz des Verfahrens zur Erntegutstromverteilung zu erhöhen sowie die Verteileinrichtung derart weiterzuentwickeln, dass eine gleichmäßige Erntegutstromverteilung auch über große Verteilbreiten erreicht wird.

Die Aufgabe wird erfindungsgemäß durch die kennzeichnenden Merkmale des Patentanspruchs 1 gelöst.

Vorteilhafte Weiterentwicklungen und Ausgestaltungen sind Gegenstand der jeweiligen Unteransprüche.

Gemäß dem Anspruch 1 wird vorgeschlagen, dass die Verteilelemente an ihrer dem Leitblech zugewandten Stirnseite mehrere Ausnehmungen aufweisen, die eine sich in Richtung der Rotationsachse verjüngende Kontur aufweisen. Hierdurch wird erreicht, dass das an der Mantelfläche eines Leitbleches entlang geführte Erntegut nicht mehr zwischen der der Mantelfläche zugewandten Stirnseite des Verteilelementes und der Mantelfläche eingeklemmt wird, sondern in radialer Richtung nach innen in die Ausnehmungen ausweichen kann. Die erfindungsgemäße Ausgestaltung des Verteilelementes vereint die Vorteile eines starren, aus einem Metall bestehenden Verteilelement mit den Vorzügen eines aus einem flexiblen Material bestehenden. Einerseits wird gegenüber dem Einsatz von flexiblen Verteilelementen eine größere Wurfweite bei gleicher Energieaufnahme erreicht und andererseits wird eine Erhöhung der Leistungsaufnahme eines Antriebes für die Verteileinrichtung bedingt durch das Verhindern des Einklemmens des Erntegutes vermieden.

Vorzugsweise können die die Kontur begrenzenden Ränder zweier benachbarter Ausnehmungen an der Stirnseite zumindest nahezu in einem Punkt zusammen laufen. Diese Weiterbildung der Verteilvorrichtung begünstigt das Umlenken des Erntegutes in die Ausnehmungen des Verteilelementes, da durch diese Anordnung der Ausnehmungen zueinander die Ausbildung von Spitzen an der Stirnseite des Verteilelementes erreicht wird, mit denen die Verteilelemente durch das Erntegut hindurch stoßen und dieses in die zur jeweiligen Spitze benachbarten Ausnehmungen des Verteilelementes umlenken. Auf diese Weise wird vermieden, dass Erntegut zwischen eine breiten Abschnitten, die zwischen den Ausnehmungen des Leitbleches ausgebildet würden, und der Mantelfläche des Leitbleches eingeklemmt wird.

Hierzu kann ein zwischen den benachbarten Ausnehmungen an der Stirnseite ausgebildeter Abschnitt eine halbkreisförmige oder eine trapezförmige Kontur aufweisen. Insbesondere kann ein zwischen den Ausnehmungen an der Stirnseite ausgebildeter Abschnitt spitz zulaufend ausgeführt sein. Die Breite des jeweiligen Abschnittes ist derart gewählt, dass das Erntegut von diesem durchstoßen werden kann. Vorzugsweise sollte die Breite eines Abschnittes zwischen den benachbarten Ausnehmungen sollte 10 mm nicht überschreiten, um den erfindungsgemäßen Effekt des Durchstoßens des Erntegutes und der Ablenkung des Erntegutes in die Ausnehmungen nicht übermäßig zu beeinträchtigen.

In vorteilhafter Weiterbildung können die Ausnehmungen verschiedene Konturen aufweisen. Beispielsweise können die Ausnehmungen eine dreieckförmige, eine parabolische oder auch eine polygone Kontur aufweisen.

Insbesondere kann die Ausnehmung ausgehend von der Außenkante des Verteilelementes eine Mindesttiefe von 10 mm aufweisen. Eine Mindesttiefe der Ausnehmungen von 10 mm hat sich als hinreichend erwiesen, damit gewährleistet werden kann, dass eine ungewollte Verdichtung des Erntegutes in den Ausnehmungen vermieden werden kann.

Vorteilhafterweise können die Verteilelemente unter einem Winkel zur Rotationsachse der Verteileinrichtung angeordnet sein.

Weiterhin können die Verteilelemente an zumindest einer ihrer sich senkrecht zur Rotationsachse nach erstreckenden Außenkanten einen zur Längsachse des Verteilelementes geneigten Abschnitt aufweisen.

Die Variation des Winkels, unter dem die Verteilelemente um die Rotationsachse angeordnet sind, sowie die Profilierung der Verteilelemente respektive eine Kombination der beiden Maßnahmen ermöglicht eine Beeinflussung der Form, des Auftreffwinkels sowie des Abgabepunktes des aus der Verteileinrichtung austretenden Erntegutstrahles auf das Feld. Eine derartige Variation ermöglicht es beispielsweise eine bessere Mittenüberdeckung der von zwei aus nebeneinander am Heck einer Erntemaschine angebrachten Verteileinrichtungen ausgebrachten Erntegutströme zu erreichen.

Die Erfindung wird nachstehend anhand eines in den Zeichnungen dargestellten Ausführungsbeispieles näher erläutert.

Es zeigen:
- Fig. 1: eine schematisierte Seitenansicht des Hecks eines selbstfahrenden Mähdreschers mit einer Häckselvorrichtung und Verteileinrichtung;
- Fig. 2: eine schematisierte Vorderansicht der Verteileinrichtung gemäß Fig. 1;
- Fig. 3a und 3b: eine schematisierte Seitenansicht von alternativ ausgeführten Verteilelementen der Verteileinrichtung gemäß Fig. 2;
- Fig. 4a bis 4c: eine schematisierte Ansicht der Anordnung von Verteilelementen um die Rotationsachse der Verteilvorrichtung;
- Fig. 5a bis 5e: eine schematisierte Darstellung von Verteilelementen mit unterschiedlichen Profilierungen.

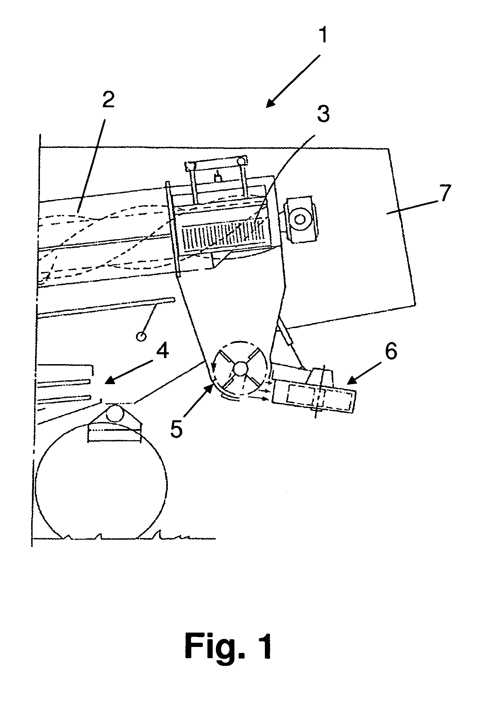

Fig.1 zeigt eine schematisierte Seitenansicht des Hecks eines Mähdreschers 1 mit einem Axialabscheideorgan 2, an welches sich eine koaxial angeschlossene Häckselvorrichtung 3 anschließt sowie mit einer Reinigungseinrichtung 4. Unterhalb der Häckselvorrichtung 3 ist ein Übergabeförderer 5 vorgesehen, der das aus der Häckslervorrichtung 3 austretende Erntegut einer dieser nachgeordneten Verteileinrichtung 6 weiterleitet. Das Axialabscheideorgan 2 respektive die Häckslervorrichtung 3 münden in einer Strohausfallhaube 7. Anstelle der Häckslervorrichtung 3 und des Übergabeförderers 5 kann auch eine Häckseleinrichtung an der Position des Übergabeförderers 5 angeordnet sein, die das aus dem Axialabscheideorgan 2 austretende Erntegut häckselt und an die Verteileinrichtung 6 weiterleitet. Alternativ zu dem Axialabscheidorgan 2 mit der Häckslervorrichtung 3 sowie des Übergabeförderers 5 können auch Schüttler sowie eine Häckseleinrichtung vorgesehen sein.

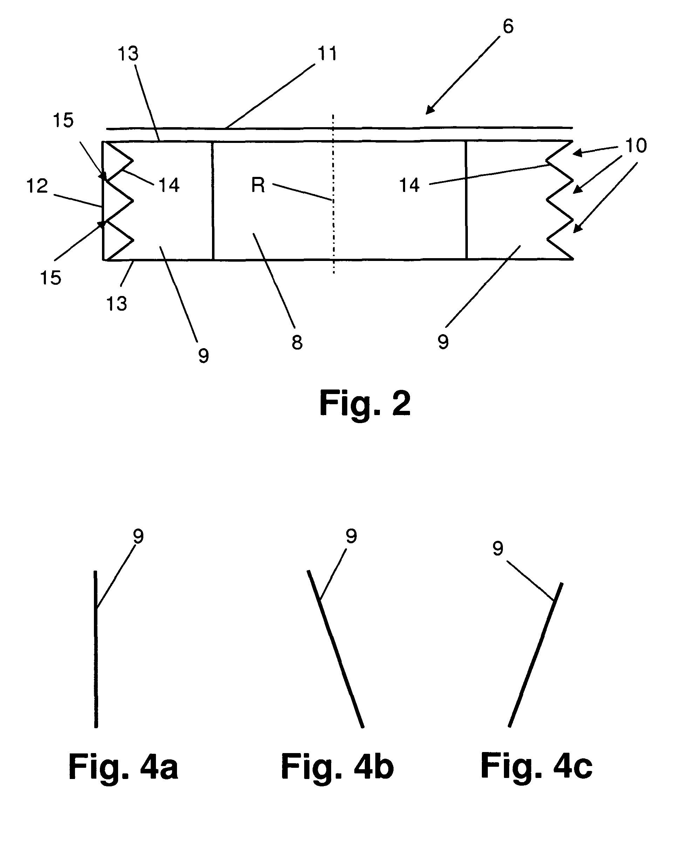

In Fig. 2 ist eine schematisierte Vorderansicht der Verteileinrichtung 6 gemäß der Fig. 1 dargestellt. Die Verteileinrichtung 6 weist einen angetriebenen Verteilläufer 8 sowie aus Metall bestehende, starre Verteilelemente 9 auf, die koaxial zur Rotationsachse R der Verteileinrichtung 6 angeordnet sind. Die sich radial nach außen erstreckenden starren Verteilelemente 9 sind im Wesentlichen senkrecht auf dem Umfang des Verteilläufers 8 verteilt angeordnet. Die Verteileinrichtung 6 ist an ihrer dem Boden abgewandten Oberseite durch eine Deckplatte 11 begrenzt und nach unten hin offen ausgeführt, um beim Stillstand der Verteileinrichtung 6 das Herausfallen des darin verbliebenen Erntegutes auf den Boden zu ermöglichen. Die Rotationsebene der Verteilelemente 9 ist zumindest abschnittsweise durch die Mantelfläche eines Leitbleches 12 begrenzt, welches der Führung des von der Häckseleinrichtung beziehungsweise dem Übergabeförderer 5 in die Verteileinrichtung 6 eingebrachten Erntegutes dient. Um das Austreten des Erntegutes aus der Verteileinrichtung 6 gezielt beeinflussen zu können, ist das Leitblech 12 um die Rotationsachse R in radialer Richtung verschwenkbar angeordnet.

Die an dem Verteilläufer 8 angeordneten Verteilelemente 9 weisen jeweils zwei zueinander parallele, sich senkrecht zu der Rotationsachse R erstreckende Außenkanten 13 sowie eine sich parallel zu der Rotationsachse R erstreckende Stirnseite 14 auf. Die Stirnseite 14 des Verteilelementes 9 ist mit Ausnehmungen 10 versehen, die eine sich in Richtung der Rotationsachse R verjüngende Kontur aufweisen. Hierzu weisen die Ausnehmungen 10 vorzugsweise eine dreieckförmige Kontur auf. Die Ausnehmungen 10 des Verteilelementes 9 sind derart zueinander beabstandet angeordnet, dass zwischen den Ausnehmungen 10 keine zu der Mantelfläche parallelen Abschnitte ausgebildet sind. Die die Kontur begrenzenden Ränder zweier benachbarter Ausnehmungen 10 laufen an der Stirnseite 14 zumindest nahezu in einem Punkt zusammen, so dass sich dort näherungsweise eine der Mantelfläche des Leitbleches 12 zugewandte als Spitze 15 ausgeführter Abschnitt ausbildet. Die als Spitze 15 ausgeführten Abschnitte können dabei eine halbreisförmige oder trapezförmige Kontur aufweisen, deren Breite 10 mm nicht überschreiten sollte. Idealerweise ist der als Spitze 15 ausgeführte Abschnitt zwischen den Ausnehmungen 10 spitz zulaufend ausgeführt. Zu der Stirnseite 14 des Verteilelementes 9 benachbart ist das verschwenkbare Leitblech 12 angeordnet. Der sich zwischen dem Leitblech 12 und der Stirnseite 14 des Verteilelements 9 ausbildende Spalt S respektive Abstand ist an den Stellen, an denen sich die Spitzen 15 und die Mantelfläche des Leitbleches 12 gegenüberstehen, am geringsten und vergrößert sich auf Grund der erfindungsgemäß verjüngenden Kontur der Ausnehmungen 10 zunehmend in Richtung der Rotationsachse R. Als Vorteilhaft hat sich gezeigt, dass die Ausnehmungen 10 ausgehend von der Außenkante des Verteilelementes 9 eine Mindesttiefe von 10 mm aufweisen.

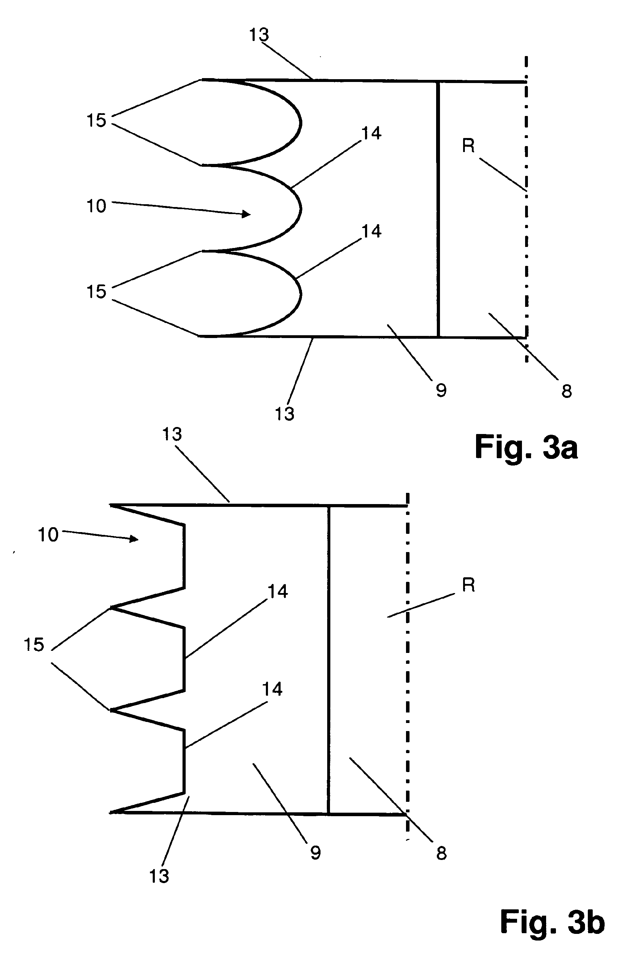

In den Fig. 3a und 3b sind alternative Ausgestaltungen der Kontur der Ausnehmungen 10 dargstellt, die gleichfalls geeignet sind, ein Einklemmen des zu fördernden und zu führenden Erntegutes zwischen dem Verteilelement 9 und dem Leitblech 12 zu vermeiden. Dabei können die Ausnehmungen 10 eine im Wesentlichen parabolische Kontur, wie sie in Fig. 3a dargestellt ist, oder eine im Wesentlichen polygone Kontur, entsprechend der Darstellung in Fig. 3b, aufweisen.

Während des Betriebes des Mähdreschers wird das Erntegut von der Häckseleinrichtung oder dem Übergabeförderer 5 der Verteileinrichtung 6 zugeführt. Das in die Verteileinrichtung 6 eintretende Erntegut wird von den Spitzen 15 an der Stirnseite 14 der Verteilelemente 9 durchstoßen und in die jeweils benachbarten Ausnehmungen 10 abgelenkt. Auf diese Weise lässt sich ein Einklemmen von Erntegut, insbesondere wenn dieses feucht und zäh ist, zwischen der Mantelfläche des Leitbleches 12 und dem jeweiligen Leitelement 9 vermeiden. Die starre Ausführung der Leitelemente 9 aus einem Metall ist gegenüber den nachgiebigeren Leitelementen aus Kunststoff verschleißresistenter und ermöglicht bei gleicher Leistungsaufnahme des Antriebes der Verteileinrichtung 6 die Erzielung größerer Wurfweiten.

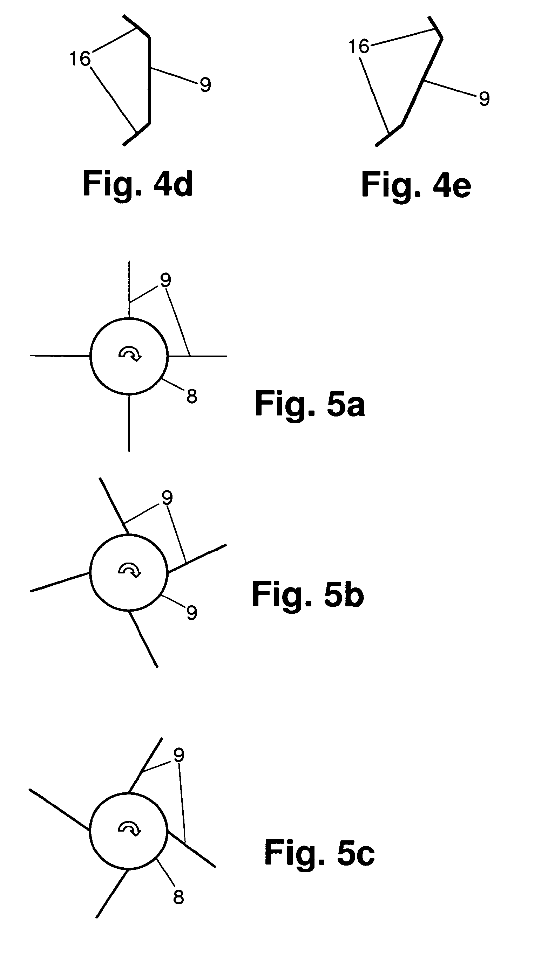

Die Darstellungen in den Fig. 4a bis 4e zeigen im Profil verschiedene Varianten der Formgebung respektive der Anordnung der Verteilelemente 9 an dem Verteilläufer 8. In den Fig. 4a bis 4c wird ein im Profil im Wesentlichen gerade ausgeführtes Verteilelement 9 in einer achsparallelen Anordnung sowie in einer zu der Rotationsachse R geneigten Anordnung dargestellt. Die Fig. 4d und 4e zeigen ein im Wesentlichen C-förmiges Profil des Verteilelementes 9 in einer entsprechenden Anordnung am Verteilläufer 8. Die unterschiedlichen Formen der Verteilelemente 9 dienen dazu, die Form, den Auftreffwinkel beziehungsweise den Abgabepunkt des Erntegutes zu beeinflussen.

Mit Bezug auf die Darstellung in den Fig. 5a bis 5c sind alternative Anordnungen der Verteilelemente 9 am Verteilläufer 8 dargestellt. Dabei sind die Verteilelemente 9 gemäß der Darstellung in Fig. 5a senkrecht zur Rotationsachse R angeordnet, während in den Fig. 5b und 5c eine im beziehungsweise gegen den Uhrzeigersinn geneigte Anordnung der Verteilelemente 9 am Verteilläufer 8 gewählt wurde. Hierdurch sind Verteilelemente 9 mit einer größeren Längsausdehnung an dem Verteilläufer 8 der Verteileinrichtung 6 befestigbar. Auch diese Maßnahme dient der gezielten Beeinflussung der Fördereigenschaften der Verteileinrichtung 6.

### Bezugszeichenliste

- 1: Mähdrescher
- 2: Axialabscheideorgan
- 3: Häckselvorrichtung
- 4: Reinigungseinrichtung
- 5: Übergabeförderer
- 6: Verteileinrichtung
- 7: Strohausfallhaube
- 8: Verteilläufer
- 9: Verteilelement
- 10: Ausnehmungen
- 11: Deckplatte
- 12: Leitblech
- 13: Außenkante
- 14: Stirnseite
- 15: Spitze
- R: Rotationsachse

## Patentansprüche

1. Selbstfahrende Erntemaschine (1) mit einer Verteileinrichtung (6) zur Austragung eines aus einer Häckseleinrichtung (5) austretenden Gutstromes, der von der Häckseleinrichtung (5) an die Verteileinrichtung (6) weitergeleitet wird, wobei die Verteileinrichtung (6) zumindest zwei sich radial zur Rotationsachse (R) nach außen erstreckende starre Vorteilelemente (9) aufweist, weiche von einer die Rotationsebene der Verteilelemente (9) zumindest abschnittsweise umschließenden Mantelfläche eines Leitbleches (12) begrenzt sind, wobei die Verteilelements (9) an ihrer dem Leitblech (12) zugewandten Stirnseite (14) mehrere Ausnehmungen (10) aufweisen, die eine sich in Richtung der Rotationsachse (R) verjüngende Kontur aufweisen,
**dadurch gekennzeichnet,**
**dass**, die die Kontur begrenzenden Ränder zweier benachbarter Ausnehmungen (10) an der Stirnseite (14) zumindest nahezu in einem Punkt zusammenlaufen, so dass die Ausnehmungen (10) derart zueinander beabstandet sind, dass sich zwischen den Ausnehmungen (10) keine zu der Mantelfläche das Leitbleches (12) parallelen Abschnitte ausbilden.

2. Selbstfahrende Erntemaschine (1)nach einem der Ansprüche 1 oder 2, **dadurch gekennzeichnet, dass** ein zwischen den benachbarten Ausnehmungen (10) an der Stirnseite (14) ausgebildeter Abschnitt (15) eine halbkreisförmige Kontur aufweist.

3. Seibstfahrende Erntemaschine (1) nach Anspruch 1, **dadurch gekennzeichnet, dass** ein zwischen den benachbarten Ausnehmungen (10) an der Stirnseite (14) ausgebildeter Abschnitt (15) spitz zulaufend ausgeführt ist.

4. Selbstfahrende Erntemaschine (1) nach einem der Ansprüche 1 oder 2, **dadurch gekennzeichnet, dass** die Ausnehmungen (10) eine dreieckförmige Kontur aufweisen.

5. Selbstfahrende Erntemaschine (1) nach einem der Ansprüche 1 bis 3, **dadurch gekennzeichnet, dass** die Ausnehmungen (10) eine parabolische Kontur aufweisen.

6. Selbstfahrende Erntemaschine (1) nach einem der Ansprüche 1 bis 3, **dadurch gekennzeichnet, dass** die Ausnehmungen (10) eine polygone Kontur aufweisen.

7. Selbstfahrende Erntemaschine (1) nach einem der Ansprüche 1 bis 6, **dadurch gekennzeichnet, dass** die Ausnehmung ausgehend von der Außenkante (13) des Verteilelementes (9) eine Mindesttiefe von 10 mm aufweist.

8. Selbstfahrende Erntemaschine (1) nach einem der Ansprüche 1 bis 7, **dadurch gekennzeichnet, dass** die Verteilelemente (9) unter einem Winkel zur Rotationsachse (R) der Vorteileinrichtung (6) angeordnet sind.

9. Selbstfahrende Erntemaschine (1) nach einem der Ansprüche 1 bis 8, **dadurch gekennzeichnet, dass** die Verteilelemente (9) an zumindest einer ihrer sich senkrecht zur Rotationsachse (R) nach außen erstreckenden Außenkanten (13) einen zur Längsachse des Verteilelementes (9) geneigten Abschnitt (16) aufweist.

## Claims

1. A self-propelled harvesting machine (1) comprising a distributing device (6) for discharging a material flow which issues from a chopper (5) and which is passed by the chopper (5) to the distributing device (6), wherein the distributing device (6) has at least two rigid distributing elements (9) which extend outwardly radially relative to the axis of rotation (R) and which are delimited by a peripheral surface of a guide plate (12), which surface encloses at least portion-wise the plane of rotation of the distributing elements (9), wherein at their front end (14) facing towards the guide plate (12) the distributing elements (9) have a plurality of recesses (10) which are of a contour that narrows in the direction of the axis of rotation (R),
**characterised in that**
the edges delimiting the contour of two adjacent recesses (10) converge at the front end (14) at least almost to a point so that the recesses (10) are so spaced relative to each other in such a way that no portions parallel to the peripheral surface of the guide plate (12) are formed between the recesses (10).

2. A self-propelled harvesting machine (1) according to claim 1 **characterised in that** a portion (15) provided between the adjacent recesses (10) at the front end (14) is of a semicircular contour.

3. A self-propelled harvesting machine (1) according to claim 1 **characterised in that** a portion (15) provided between the adjacent recesses (10) at the front end (14) is of a pointedly converging configuration.

4. A self-propelled harvesting machine (1) according to one of claims 1 or 2 **characterised in that** the recesses (10) are of a triangular contour.

5. A self-propelled harvesting machine (1) according to one of claims 1 to 3 **characterised in that** the recesses (10) are of a parabolic contour.

6. A self-propelled harvesting machine (1) according to one of claims 1 to 3 **characterised in that** the recesses (10) are of a polygonal contour.

7. A self-propelled harvesting machine (1) according to one of claims 1 to 6 **characterised in that** the recess is of a minimum depth of 10 mm starting from the outside edge (13) of the distributing element (9).

8. A self-propelled harvesting machine (1) according to one of claims 1 to 7 **characterised in that** the distributing elements (9) are arranged at an angle to the axis of rotation (R) of the distributing device (6).

9. A self-propelled harvesting machine (1) according to one of claims 1 to 8 **characterised in that** at at least one of their outside edges (13) which extend outwardly perpendicularly to the axis of rotation (R) the distributing elements (9) have a portion (16) which is inclined relative to the longitudinal axis of the distributing element (9).

## Revendications

1. Machine de récolte automotrice (1) comprenant un dispositif de répartition (6) destiné à décharger un flux de produit qui sort d'un dispositif de hachage (5) et qui est transmis au dispositif de répartition (6) par le dispositif de hachage (5), le dispositif de répartition (6) présentant au moins deux éléments de répartition rigides (9) qui s'étendent vers l'extérieur radialement par rapport à l'axe de rotation (R) et qui sont limités par une surface d'enveloppe d'une tôle directrice (12) entourant au moins partiellement le plan de rotation des éléments de répartition (9), les éléments de répartition (9) présentant sur leur face frontale (14) tournée vers la tôle directrice (12) plusieurs évidements (10) présentant un contour qui se rétrécit dans la direction de l'axe de rotation (R), **caractérisée en ce que** les bords de deux évidements (10) voisins sur la face frontale (14) qui limitent le contour convergent au moins pratiquement en un point, de sorte que les évidements (10) sont espacés les uns des autres, de façon qu'aucune portion parallèle à la surface d'enveloppe de la tôle directrice (12) ne soit formée entre les évidements (10).

2. Machine de récolte automotrice (1) selon une des revendications 1 ou 2, **caractérisée en ce qu'**une portion (15) formée entre les évidements (10) voisins sur la face frontale (14) présente un contour semi-circulaire.

3. Machine de récolte automotrice (1) selon la revendication 1, **caractérisée en ce qu'**une portion (15) formée entre les évidements (10) voisins sur la face frontale (14) se termine en pointe.

4. Machine de récolte automotrice (1) selon une des revendications 1 ou 2, **caractérisée en ce que** les évidements (10) présentent un contour triangulaire.

5. Machine de récolte automotrice (1) selon une des revendications 1 à 3, **caractérisée en ce que** les évidements (10) présentent un contour parabolique.

6. Machine de récolte automotrice (1) selon une des revendications 1 à 3, **caractérisée en ce que** les évidements (10) présentent un contour polygonal.

7. Machine de récolte automotrice (1) selon une des revendications 1 à 6, **caractérisée en ce que** l'évidement présente une profondeur minimale de 10 mm à partir du bord extérieur (13) de l'élément de répartition (9).

8. Machine de récolte automotrice (1) selon une des revendications 1 à 7, **caractérisée en ce que** les éléments de répartition (9) sont disposés selon un angle par rapport à l'axe de rotation (R) du dispositif de répartition (6).

9. Machine de récolte automotrice (1) selon une des revendications 1 à 8, **caractérisée en ce que** les éléments de répartition (9) présentent, sur au moins un de leurs bords extérieurs (13) s'étendant vers l'extérieur perpendiculairement à l'axe de rotation (R), une portion (16) inclinée par rapport à l'axe longitudinal de l'élément de répartition (9).
